# EUROPEAN PATENT APPLICATION

(11) **EP 4 715 359 A1**
(43) Date of publication of application: **25.03.2026**
(21) Application number: 25194718.0
(22) Date of filing: 07.08.2025
(51) Int. Cl.: G01M 3/32, F01P 11/18, F25B 49/00, H01M 10/42

(54) **COOLANT LEAK DETECTION APPARATUS AND METHOD OF DETECTING COOLANT LEAK USING THE SAME**

(30) Priority: 04.09.2024 KR 20240119880
(71) Applicant: SAMSUNG SDI CO., LTD., Yongin-si, Gyeonggi-do 17084 (KR)
(72) Inventor: KIM, JINBEOM, 17084 YONGIN-SI (KR); KWAK, EUNOK, 17084 YONGIN-SI (KR)
(74) Representative: Regimbeau

(57) **Abstract**

Provided are a coolant leak detection apparatus (1) and method of detecting a coolant leak using the same. The apparatus is capable of measuring a mass and temperature of coolant (CW) stored in a tank part (20), and detecting a coolant leak using information on the mass and temperature of the coolant. The coolant leak detection apparatus (1) includes a mass measuring part (100) being installed on a tank part (20) that stores coolant (CW) and the mass measurement part being configured to measure a mass of the coolant stored in the tank part, a temperature measuring part (200) being installed on the tank part (20) and configured to measure temperature of the coolant, and a control part (300) electrically connected to the mass measuring part and temperature measuring part and configured to detect a leak of the coolant using information on the mass and temperature of the coolant received from the mass measuring part (100) and temperature measuring part (200), respectively.

## Description

### FIELD

The embodiments described herein relate to a coolant leak detection apparatus and a method of detecting a coolant leak using the same, and more particularly, relate to a coolant leak detection apparatus capable of detecting a leak of coolant that cools an energy storage system (ESS), and a method of detecting a coolant leak using the same.

### BACKGROUND

In general, energy storage systems are systems that store and manage energy for efficient use, and are utilized in power plants, transmission and distribution facilities, homes, factories, businesses, and the like. Such energy storage systems can enhance power supply stability by storing electrical energy for use at a later time when needed.

These energy storage systems use a plurality of battery modules capable of storing power, and the energy storage capacity and stability of the battery modules may vary according to the surrounding temperature, and thus it is necessary to control the temperature of the energy storage system through a cooling system to enhance the performance of the energy storage system.

The above-described information disclosed in the related art of the present disclosure is for improving the understanding of the background of the present disclosure and thus may include information that does not constitute the prior art.

### SUMMARY

Embodiments are directed to providing a coolant leak detection apparatus capable of measuring a mass and temperature of coolant stored in a tank part, and precisely detecting a coolant leak using information on the mass and temperature of the coolant, and a method of detecting a coolant leak using the same.

Objects to be solved by the present disclosure are not limited to the object mentioned above, and other objects and advantages of the present disclosure not described may be understood by the following description, and will be more clearly understood by the embodiments of the present disclosure. It will also be appreciated that the objects and advantages to be solved by the present disclosure may be implemented by the means and combinations thereof indicated in the claims.

Additional aspects will be set forth in part in the description which follows and, in part, will be apparent from the description, or may be learned by practice of the presented embodiments of the disclosure.

According to an aspect of the present disclosure, there is provided a coolant leak detection apparatus including a mass measuring part being installed on a tank part that stores coolant and the mass measuring part being configured to measure a mass of the coolant stored in the tank part, a temperature measuring part being installed on the tank part and configured to measure a temperature of the coolant stored in the tank part, and a control part electrically connected to the mass measuring part and the temperature measuring part and configured to detect a leak of the coolant using information on the mass and information on the temperature of the coolant, which are received from the mass measuring part and the temperature measuring part, respectively.

In some embodiments, the temperature measuring part may measure temperatures of the coolant, which is stored in the tank part, at a first time point and a second time point different from the first time point.

In some embodiments, the mass measuring part may measure masses of the coolant, which is stored in the tank part, at the first time point and the second time point.

In some embodiments, the control part may calculate a measured mass change rate of the coolant between the first time point and the second time point according to temperature.

In some embodiments, the control part may store information on a reference mass of the coolant at a preset temperature.

In some embodiments, the control part may receive information on a measured mass measured at the preset temperature from the mass measuring part, and detect the leak of the coolant by comparing the measured mass with the reference mass and determining whether the measured mass falls within a permissible range.

In some embodiments, the mass measuring part may be disposed below the tank part, and may measure the mass of the coolant.

In some embodiments, the control part may calculate an average of masses of the coolant measured by the mass measuring part over a preset period of time as a measured mass.

In some embodiments, the mass measuring part may be provided as a plurality of mass measuring parts, which are disposed circumferentially around a center of the tank part and spaced apart from each other.

In some embodiments, the coolant leak detection apparatus may further include a stirring part installed inside the tank part and configured to circulate the coolant contained in the tank part.

In some embodiments, the stirring part may include a stirring body positioned inside the tank part and configured to receive coolant from outside the tank part and discharge the coolant into the tank part.

In some embodiments, the coolant leak detection apparatus may further include an alarm part configured to receive information on whether the leak of the coolant has been detected from the control part and provide an alarm to a user when the leak has been detected.

In some embodiments, the control part may reset a reference mass at a preset temperature at every preset time interval.

According to another aspect of the present disclosure, there is provided a method of detecting a coolant leak, the method including measuring a mass of coolant stored in a tank part, measuring a temperature of the coolant stored in the tank part, and detecting a leak of the coolant using the measured mass and temperature, by a control part.

In some embodiments, the measuring of the temperature of the coolant comprises measuring temperatures of the coolant stored in the tank part at a first time point and a second time point different from the first time point.

In some embodiments, the method further comprises calculating, using the control part, a measured mass change rate of the coolant between the first time point and the second time point according to temperature.

In some embodiments, the method further comprises storing, using the control part, information on a reference mass change rate of the coolant, which corresponds a mass change according to temperature.

In some embodiments, measuring of the mass of the coolant comprises measuring, with a measuring part disposed below the tank part, the mass of the coolant.

In some embodiments, the method may further include stirring the coolant contained in the tank part.

In some embodiments, the method may further include generating a notification regarding the leak of the coolant when an alarm part receives an electrical signal from the control part upon detecting the leak.

### BRIEF DESCRIPTION OF THE DRAWINGS

The following drawings attached to the present specification illustrate exemplary embodiments of the present disclosure and function to facilitate further understanding of the present disclosure along with the detailed description of the disclosure, which will be described below, and accordingly, the present disclosure should not be construed as being limited to matters illustrated in the drawings:
FIG. 1 is a view schematically illustrating a coolant leak detection apparatus according to an embodiment of the present disclosure;
FIGS. 2A and 2B are bottom views illustrating a tank part in which mass measuring parts according to embodiments of the present disclosure are disposed;
FIG. 3 is a view illustrating a state in which coolant is being stirred in the tank part according to an embodiment of the present disclosure;
FIG. 4 is a block diagram illustrating a control part according to an embodiment of the present disclosure;
FIG. 5 is a temperature-mass graph of coolant contained in the tank part;
FIG. 6 is a flowchart illustrating a method of detecting a coolant leak according to an embodiment of the present disclosure; and
FIG. 7 is a flowchart illustrating a process of detecting a coolant leak according to an embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the embodiments. As used herein, the term "and/or" includes any and all combinations of one or more of the associated listed items. Expressions such as "at least one of," when preceding a list of elements, modify the entire list of elements and do not modify the individual elements of the list.

Hereinafter, exemplary embodiments of the present disclosure will be described in detail with reference to the accompanying drawings. Prior to this, the terms or words used in the present specification and claims should not be interpreted as limited to their conventional or dictionary meanings. Based on the principle that the inventors may appropriately define the concepts of terms to describe their inventions in the best possible way, these terms must be interpreted in meanings and concepts that align with the technical spirit of the present disclosure. Accordingly, the embodiments described in the present specification and configurations illustrated in the drawings are the most exemplary embodiments of the present disclosure and do not represent all technical ideas of the present disclosure, and thus, it should be understood that at the time of the present application, there may be various equivalents and modifications that can replace the embodiments and configurations.

As used herein, the terms "comprise, include," and/or "comprising, including" specify the presence of stated shapes, numbers, steps, operations, members, elements and/or groups thereof but is not intended to exclude the presence or addition of one or more other shapes, numbers, operations, members, elements and/or groups thereof.

To aid in understanding of the present disclosure, the accompanying drawings are not drawn to scale, but dimensions of some components may be exaggerated. The same reference number may be assigned to the same component in different embodiments.

A statement that two objects of comparison are "identical" means "substantially identical." Therefore, "substantially identical" may include deviations considered to be low in the art, for example, deviations within 5%. Uniformity of a certain parameter in a predetermined region may mean that it is uniform in terms of an average value for the parameter.

Although "first," "second," and the like are used to describe various components, these components are not limited by these terms. These terms are used to distinguish one component from another, and it goes without saying that a first component may be a second component unless otherwise specifically stated. Throughout the specification, unless otherwise indicated, each component may be singular or plural.

Placing any component on the "upper (or lower)" of a component or "top (or below)" of a component may mean that any component is disposed in contact with the top (or bottom) surface of the component, and also may mean that other components may be interposed between the component and any component disposed on (or under) the component.

Further, it should be noted that when one component is described as being "connected," "coupled," or "joined" to another component, still another component may be "connected," "coupled," or "joined" between the two components, even though the component may be directly "connected," "coupled," or "joined" to the other component. Further, when a certain part is described as being electrically coupled with another part, this includes not only cases where the two parts are directly connected but also cases where the two parts are connected with other components interposed therebetween.

Throughout the specification, when "A and/or B" is stated, it means A, B, or A and B, unless otherwise specified. That is, the term "and/or" includes any or all combinations of a plurality of listed items. When "C to D" is stated, it means C or more and D or less, unless otherwise specified.

The terms used herein are intended to describe embodiments of the present disclosure and are not intended to limit the present disclosure.

With the recent increase in the capacity of energy storage systems, the amount of heat generated by the energy storage systems has also risen, As a result, a water-cooling method has been adopted, overcoming the limitations of conventional air-cooling methods. Although the water-cooling method has higher cooling efficiency compared to the air-cooling method, a coolant leak can be critical to the energy storage system. As a result, there is a need to develop technology for detecting such a leak.

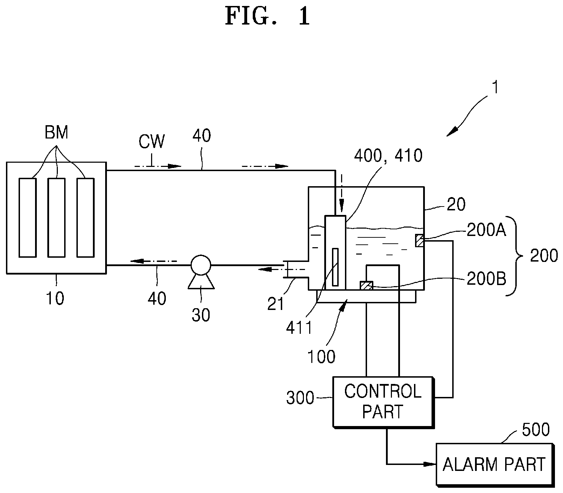

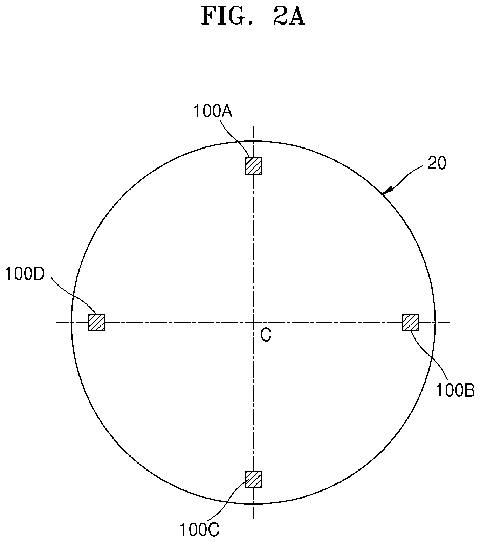

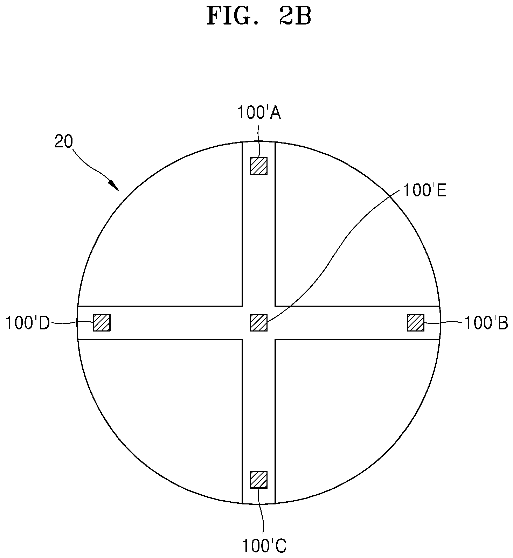

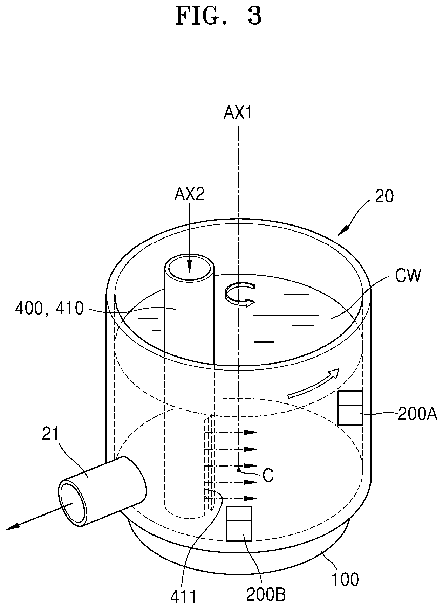

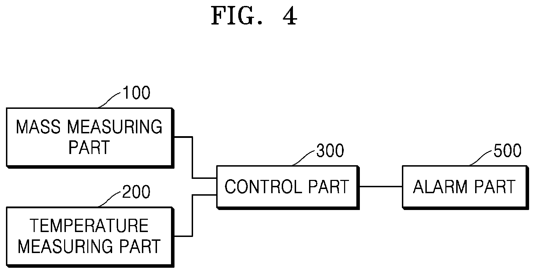

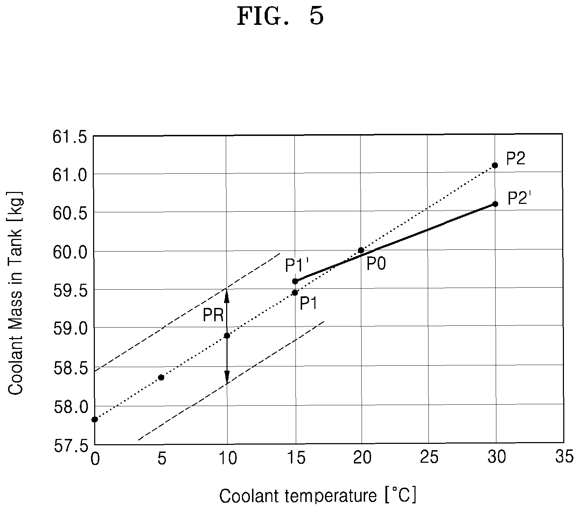

FIG. 1 is a view schematically illustrating a coolant leak detection apparatus according to an embodiment of the present disclosure. FIGS. 2A and 2B are bottom views illustrating a tank part in which mass measuring parts according to embodiments of the present disclosure are disposed. FIG. 3 is a view illustrating a state in which coolant is being stirred in the tank part according to an embodiment of the present disclosure. FIG. 4 is a block diagram illustrating a control part according to an embodiment of the present disclosure. FIG. 5 is a temperature-mass graph of coolant contained in the tank part.

Referring now to FIG. 1, in a cooling system that cools an energy storage system 10 including at least one or more battery modules denoted BM in FIG. 1, a coolant leak detection apparatus 1 according to an embodiment of the present disclosure may detect a leak of coolant denoted CW in FIG. 1 that may occur in a tank part 20 in which the coolant CW is stored and contained.

The energy storage system 10 may use a plurality of battery modules BM capable of storing power, and the energy storage capacity and stability of the battery modules BM may vary depending on the surrounding temperature, and thus, to enhance the performance of the energy storage system 10, there is a need to control the temperature of the energy storage system 10 through the cooling system, which plays a key role in temperature control of the energy storage system 10.

Referring to FIG. 1, the cooling system capable of controlling the temperature of the energy storage system 10 may include the tank part 20, a pump part 30, and piping 40.

The tank part 20 may receive and store the coolant CW from the outside, and although not shown in the figure, a cooling part may be installed inside the tank part 20. The cooling part may receive power from the outside, and cool the coolant CW contained in the tank part 20.

The coolant CW cooled by the cooling part may be discharged to the outside of the tank part 20 through a discharge port 21 formed in the tank part 20, and the discharged coolant CW may be supplied to the energy storage system 10 through the piping 40 connected to the discharge port 21.

Referring to FIGS. 1 and 3, the coolant CW that has passed through the energy storage system 10 may flow into the tank part 20 and the cooling part according to an embodiment of the present disclosure through a stirring part 400, specifically through a stirring body 410, which is described herein.

However, the present disclosure is not necessarily limited thereto. In some embodiments, the coolant CW may flow into the interior of the tank part 20 through a separate inlet port (not shown) formed in the tank part 20.

Referring to FIG. 1, in the cooling system according to an embodiment of the present disclosure, the coolant CW may cool the energy storage system 10 in a circulating manner.

However, the present disclosure is not limited thereto, and various modifications are possible, such as storing the coolant CW that has passed through the energy storage system 10 in a separate storage part (not shown) instead of directly reentering the tank part 20, and then having the coolant CW flow from the storage part into the tank part 20.

Referring to FIG. 1, the pump part 30 is disposed between the energy storage system 10 and the tank part 20, and generates power to cause the coolant CW to flow through the piping 40. The specific configuration of the pump part 30 is known in the art and thus will not be described in detail herein.

Referring to FIG. 1, the piping 40 connects the energy storage system 10 to the tank part 20, and may provide a flow path for coolant CW to cool the energy storage system 10.

The piping 40 according to an embodiment of the present disclosure may connect the energy storage system 10 to the tank part 20, and may connect the energy storage system 10 to the stirring part 400, specifically the stirring body 410. Referring to FIG. 1, the coolant CW may flow into the energy storage system 10 along the piping 40 from the tank part 20, flow within the energy storage system 10, cool the energy storage system 10, and then be discharged to the outside. The coolant CW discharged from the energy storage system 10 may flow into the interior of tank part 20 again through the piping 40 and the stirring part 400, specifically through the stirring body 410.

Referring to FIGS. 1 and 3, the coolant CW flowing into the stirring body 410 through the piping 40 may flow into an inner space of the tank part 20 through a discharge slit 411 that is formed to extend in a longitudinal direction of the stirring body 410 (in a vertical direction based on FIG. 3), as is described herein. Referring to FIG. 1, the coolant leak detection apparatus 1 according to an embodiment of the present disclosure may include a mass measuring part 100, a temperature measuring part 200, a control part 300, the stirring part 400, and an alarm part 500.

Referring now to FIGS. 1 and 2A, the mass measuring part 100 according to an embodiment of the present disclosure is installed on the tank part 20 that stores the coolant CW, and may measure a mass of the coolant CW stored in the tank part 20.

In the present specification, the term 'mass' refers to a value that takes into account the volume expansion and contraction of the coolant CW depending on the temperature, and may mean "density or weight." The term "mass" as used herein refers to the intrinsic value of a substance that does not change, but for convenience of description, the term "mass" will be used to describe weight. The mass measuring part 100 according to an embodiment of the present disclosure is disposed below (based on FIG. 3) the tank part 20 and may measure a mass of the coolant CW stored (or contained) in the tank part 20.

At this point, since a mass of the tank part 20 is constant, the mass of the coolant CW can be measured by subtracting the mass of the tank part 20 from a mass actually measured by the mass measuring part 100.

Referring to FIG. 2A, the mass measuring part 100 may be provided as a plurality of mass measuring parts, and a plurality of mass measuring parts 100A, 100B, 100C, and 100D may be disposed circumferentially around the center C of the tank part 20, spaced apart from each other.

In some embodiments, the plurality of mass measuring parts 100A, 100B, 100C, and 100D may be disposed at preset locations on a bottom surface of the tank part 20. Referring to FIG. 2A, the plurality of mass measuring parts 100A, 100B, 100C, and 100D may be disposed at preset intervals from each other around the center C of the bottom surface of the tank part 20.

Referring to FIG. 2A, a distance from the center C of the bottom surface of the tank part 20 to each of the plurality of mass measuring parts 100A, 100B, 100C, and 100D may be equal.

Referring to FIG. 2A, the tank part 20 according to an embodiment of the present disclosure is formed in a cylindrical shape, and the bottom surface of the tank part 20 is formed in a circular shape. However, the present disclosure is not limited thereto, and various modifications are possible, such as forming the bottom surface in a polygonal shape.

When the bottom surface of the tank part 20 is formed in a polygonal shape, the plurality of mass measuring parts 100 may be disposed at the respective vertices formed on the bottom surface of the tank part 20.

Referring to FIG. 2B, which illustrates mass measuring parts according to another embodiment of the present disclosure, the mass measuring parts may be formed in a cross (+) shape. Accordingly, four mass measuring parts 100'A, 100'B, 100'C, and 100'D may be disposed circumferentially around the center of the bottom surface of the tank part 20, and one mass measuring part 100'E may be disposed at the center of the bottom surface of the tank part 20.

Referring to FIG. 4, the mass measuring part 100 may measure a mass of the coolant CW stored in the tank part 20 and transmit information on the mass to the control part 300.

Referring to FIGS. 2A and 2B, a plurality of mass measuring parts according to embodiments of the present disclosure are provided, and information on the mass of the coolant CW measured by each of the plurality of mass measuring parts may be transmitted to the control part 300 as an electrical signal. The control part 300 may calculate an average of the masses measured by the plurality of mass measuring parts 100 as a measured mass.

Further, the tank part 20 containing the coolant CW may vibrate during the operation of the cooling system, but by using the average of the masses obtained from the plurality of mass measuring parts 100 as the measured mass, the reliability of the measured mass can be improved.

The mass measuring part 100 according to an embodiment of the present disclosure may measure masses of the coolant CW, which is contained in the tank part 20, at different time points.

Information on the masses of the coolant CW measured at different time points by the mass measuring part 100 is transmitted to the control part 300, and information on the temperatures of the coolant CW measured at different time points by the temperature measuring part 200, which will be described later, is also transmitted to the control part 300. This enables the measurement and calculation of a mass change rate of the coolant CW according to temperature. Referring to FIGS. 1, 2, and 4, the temperature measuring part 200 according to an embodiment of the present disclosure is installed on the tank part 20, and may measure a temperature of the coolant CW stored in the tank part 20.

The temperature measuring part 200 may be provided as a plurality of temperature measuring parts, and a plurality of temperature measuring parts 200A and 200B may be installed at different locations on the tank part 20 and may measure temperatures of the coolant CW.

Referring to FIG. 3, in the present disclosure, among the plurality of temperature measuring parts 200A and 200B, one temperature measuring part 200A is disposed on a side portion of the tank part 20, and another temperature measuring part 200B is disposed on the bottom surface of the tank part 20. However, the present disclosure is not limited thereto, and the temperature measuring parts may be disposed at various locations within the technical concept of measuring the temperatures of the coolant CW stored inside the tank part 20 at different locations.

The temperature measuring part 200 according to an embodiment of the present disclosure may measure temperatures of the coolant CW stored inside the tank part 20 at a first time point and at a second time point different from the first time point.

Referring to FIG. 4, the temperature measuring part 200 according to an embodiment of the present disclosure may be electrically connected to the control part 300. Information on the temperature of the coolant CW, which is stored inside the tank part 20, measured by the temperature measuring part 200 may be transmitted as an electrical signal to the control part 300.

Information on the temperatures of the coolant CW measured at different time points by the temperature measuring part 200 is transmitted to the control part 300, and information on the masses of the coolant CW measured at different time points by the mass measuring part 100 is also transmitted to the control part 300. This enables the measurement and calculation of a mass change rate of the coolant CW according to temperature.

In this case, the measured temperature measured at each time point may be an average of the temperatures measured by the plurality of temperature measuring parts 200A and 200B.

Referring to FIGS. 1 and 4, the control part 300 according to an embodiment of the present disclosure is electrically connected to the mass measuring part 100 and the temperature measuring part 200, and may receive information on the mass and temperature of the coolant CW, which is stored in the tank part 20, from the mass measuring part 100 and the temperature measuring part 200, respectively.

Referring to FIG. 5, the control part 300 may have information on a mass function of the coolant CW according to temperature. In some embodiments, the information may include information on the mass change rate of the coolant CW according to temperature.

In the present specification, a preset mass change rate of the coolant CW according to temperature is defined as a "reference mass change rate."

The control part 300 according to an embodiment of the present disclosure may have information on a reference mass at a preset temperature.

A volume of the coolant CW flowing in the cooling system is the sum of a volume of the coolant CW passing through the energy storage system 10, a volume of the coolant CW within the piping 40 located between the tank part 20 and the energy storage system 10, and a volume of the coolant CW stored in the tank part 20.

Since the volume of the coolant CW passing through the energy storage system 10 and the volume of the coolant CW within the piping 40 are fixed, and the coolant CW fills those volumes at the respective locations, the volume of the coolant CW stored in the tank part 20 has the potential to fluctuate according to the temperature.

In other words, since the mass measuring part 100 measures the mass of the coolant CW contained in the tank part 20 while reflecting any changes in volume (increase or decrease), there is no need to measure the change in volume separately using a level sensor.

The coolant leak detection apparatus 1 according to an embodiment of the present disclosure allows the control part 300 to calculate a mass change rate according to temperature, and to detect whether there is a leak of the coolant CW by comparing a calculated 'measured mass change rate' with the "reference mass change rate," which is a preset mass change rate according to temperature.

In some embodiments, the control part 300 may calculate the measured mass change rate of the coolant CW according to temperature between a first time point and a second time point that is different from the first time point.

The control part 300 may receive information on the masses at the first and second time points from the mass measuring part 100, and information on the temperatures at the first and second time points from the temperature measuring part 200.

Referring to FIGS. 1, 2A, and 3, when the masses and temperatures of the coolant CW, which is stored in the tank part 20, at the first and second time points are measured by the plurality of mass measuring parts 100A, 100B, 100C, and 100D and the plurality of temperature measuring parts 200A and 200B, the control part 300 may receive information on the masses and temperatures from the plurality of mass measuring parts 100 and the plurality of temperature measuring parts 200, respectively, and calculate an average mass and an average temperature at the first and second time points.

The control part 300 may calculate the measured mass change rate, which is a mass change rate according to temperature, between the first time point and the second time point and compare a difference between the two change rates with the stored reference mass change rate, and may determine that the coolant CW stored in the tank part 20 is leaking when the difference exceeds a preset range. Preferably, when the measured mass change rate deviates from a value between 90% to 110% of the reference mass change rate, the control part 300 may detect that there is a leak of the coolant CW stored in the tank part 20.

Referring to FIG. 5, the control part 300 may store information on the reference mass at the preset temperature. As described herein, the "information on the reference mass" may refer to "information on a reference density," which represents a mass value corresponding to a preset volume at a preset temperature.

The control part 300 may set a permissible range PR for mass change at the preset temperature. As a result, in addition to calculating the mass change rate according to temperature, when the measured mass measured at the preset temperature deviates from the permissible range PR, it may be determined that the coolant CW stored in the tank part 20 has leaked.

Preferably, when the measured mass deviates from a value between 90% to 110% of the reference mass, the control part 300 may detect that there is a leak in the coolant CW stored in the tank part 20.

Accordingly, the control part 300 may receive information on the measured mass, which is measured at a preset temperature, from the mass measuring part 100, and detect a leak of the coolant CW by comparing the measured mass with the reference mass and determining whether the measured mass falls within the permissible range.

The control part 300 may reset the reference mass at the preset temperature at preset intervals.

In other words, even when the volume of the coolant CW decreases due to evaporation or the like while flowing in the cooling system, rather than an actual leak of the coolant CW stored in the tank part 20, resetting the reference mass may prevent misjudgment of a leak by distinguishing the mass change caused by the decrease in volume due to evaporation or the like from the mass change caused by the actual leak.

Referring to FIGS. 1 and 4, the control part 300 according to an embodiment of the present disclosure may be electrically connected to the alarm part 500, which is described herein. When the control part 300 detects a leak of the coolant CW stored in the tank part 20, the control part 300 may transmit an electrical signal to the alarm part 500 to allow the alarm part 500 to transmit the information about the leak of the coolant CW to a user.

The control part 300 may measure the mass change rate of the coolant CW, which is stored in the tank part 20, according to temperature in real time, and may detect a leak of the coolant CW by comparing the measured mass change rate with the reference mass change rate in real time.

Referring to FIGS. 1 and 3, the stirring part 400 according to an embodiment of the present disclosure is installed inside the tank part 20 and may circulate the coolant CW contained in the tank part 20. The stirring part 400 may include the stirring body 410.

Referring to FIGS. 1 and 3, the stirring body 410 has a hollow interior, which may provide a flow path for the coolant CW. The stirring body 410 may be fixed in position inside the tank part 20.

Referring to FIG. 3, the stirring body 410 is formed to extend along a central axis AX2 thereof in a longitudinal direction, and the central axis AX2 of the stirring body 410 in the longitudinal direction may be disposed to be spaced apart from a central axis AX1 of the tank part 20 in the longitudinal direction.

That is, the central axis AX2 of the stirring body 410 is disposed to be spaced apart from the central axis AX1 of the tank part 20, which increases the fluidity of the coolant CW stored in the tank part 20 due to a pressure of the coolant CW discharged from the stirring body 410 into the inner space of the tank part 20, thereby enhancing a stirring effect.

Referring to FIGS. 1 and 3, the stirring body 410 may be formed to extend in a preset direction (in the vertical direction based on FIG. 3), and the discharge slit 411 passing through the interior and exterior of the stirring body 410 may be formed to extend in the stirring body 410.

The stirring body 410 may be coupled to the piping 40, allowing the coolant CW that has passed through the energy storage system 10 to flow into the stirring body 410 through the piping 40, and then be discharged into the interior of the tank part 20 through the discharge slit 411 formed on another side (lower side based on FIG. 3) of the stirring body 410 opposite one side (upper side based on FIG. 3) of the stirring body 410 coupled to the piping 40.

Although not shown in the figure, a guide part may be coupled to the stirring body 410 while surrounding the discharge slit 411. The guide part is disposed on the flow path of the coolant CW discharged to the outside of the stirring body 410 through the discharge slit 411, and has the effect of guiding the flow path of the coolant CW flowing inside the tank part 20.

One surface of the guide part, which faces the discharge slit 411 and is positioned outside the stirring body 410, may be formed to be inclined. In an embodiment, one surface of the guide part may be formed in a curved shape with a preset radius of curvature.

Accordingly, a flow path for the coolant CW may be reliably provided when the coolant CW flows in a clockwise or counterclockwise direction around the central axis AX1 of the tank part 20.

For example, as the guide part is formed, when the coolant CW is discharged into the inner space of the tank part 20 through the discharge slit 411 and a virtual circular shape is formed by sharing a center with the tank part 20, the coolant CW may flow in a tangential direction of the virtual circle, so that the coolant CW may be effectively stirred in the inner space of the tank part 20 due to the circulating coolant CW even without a separate stirring device.

Referring to FIGS. 1 and 4, the alarm part 500 according to an embodiment of the present disclosure is electrically connected to the control part 300, and may receive information about whether there is a leak of the coolant CW from the control part 300 and provide an alarm to the user when the coolant CW leaks.

The alarm part 500 may provide a visual or auditory alarm to the user, allowing the user to quickly detect whether there is a leak in the tank part 20

A method of detecting a coolant leak using the above-described coolant leak detection apparatus 1 according to an embodiment of the present disclosure and the effect thereof will be described.

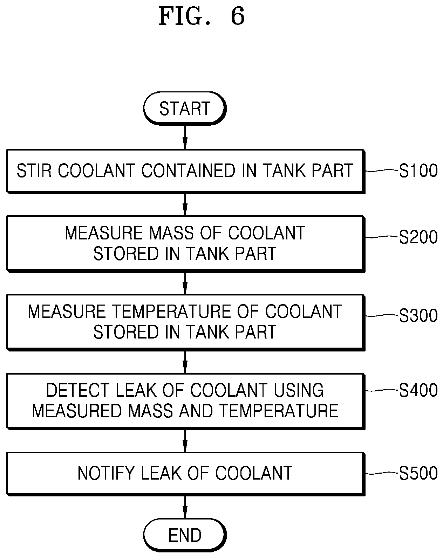

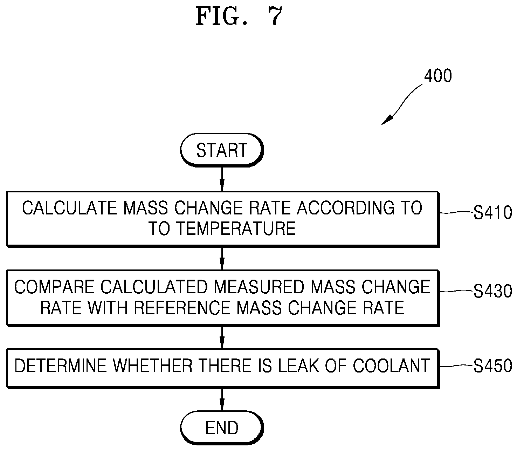

FIG. 6 is a flowchart illustrating the method of detecting a coolant leak according to an embodiment of the present disclosure. FIG. 7 is a flowchart illustrating a process of detecting a leak of the coolant CW, according to an embodiment of the present disclosure.

Referring to FIGS. 1 and 6, the method of detecting a coolant leak according to an embodiment of the present disclosure may include stirring the coolant CW stored in the tank part 20 (S100), measuring a mass of the coolant CW stored in the tank part 20 (S200), measuring a temperature of the coolant CW stored in the tank part 20 (S300), detecting a leak of the coolant CW (S400), and notifying of the leak of the coolant CW (S500).

Referring to FIGS. 1, 3, and 6, the stirring of the coolant CW (S100) is an operation of stirring the coolant CW stored in the tank part 20, and the stirring part 400 located inside the tank part 20 may generate circulation of the coolant stored in the tank part 20 to increase the fluidity of the coolant CW.

The coolant CW, which has passed through the energy storage system 10, may flow into the inner space of the tank part 20 through the piping 40 and the stirring part 400. In some embodiments, the coolant CW flowing into the stirring body 410 through one side of the stirring body 410 (the upper side of the stirring body 410 in FIG. 3) may be discharged into the inner space of the tank part 20 through the discharge slit 411 formed on another side (the lower side of the stirring body 410 in FIG. 3) of the stirring body 410.

Referring to FIG. 3, since the central axis AX2 of the stirring body 410 in the longitudinal direction is disposed to be spaced apart from the central axis AX1 of the tank part 20 in the longitudinal direction by a preset distance, the coolant CW discharged through the discharge slit 411 may stir the coolant CW stored inside the tank part 20.

Accordingly, as the coolant CW stored inside the tank part 20 may be stirred by the coolant CWflowing into the tank part 20 again, the structure may be simplified without the need for a separate stirring device.

Referring to FIGS. 1 to 4, in the measuring of the mass of the coolant CW stored in the tank part 20 (S200), the mass measuring part 100 may measure a mass of the coolant CW stored in the tank part 20. The mass measuring part 100 may measure masses of the coolant CW stored in the tank part 20 at different time points.

Further, information on the masses of the coolant CW measured from the plurality of mass measuring parts 100 may be transmitted to the control part 300, and the control part 300 may calculate an average of the masses of the coolant CW measured from the plurality of mass measuring parts 100 as a measured mass. Referring to FIGS. 2A and 2B, the reliability of measuring the mass of the coolant CW stored in the tank part 20 may be improved by arranging the plurality of mass measuring parts at different locations on one side of the tank part 20 (lower side based on FIG. 1), and calculating an average of the masses measured by the plurality of mass measuring parts.

Referring to FIGS. 1, 3, and 4, in the measuring of the temperature of the coolant CW stored in the tank part 20 (S300), the temperature measuring part 200 may measure a temperature of the coolant CW stored in the tank part 20. The temperature measuring part 200 may measure temperatures of the coolant CW stored in the tank part 20 at different time points.

Further, information on the temperatures of the coolant CW measured by the plurality of temperature measuring parts 200A and 200B may be transmitted to the control part 300, and the control part 300 may calculate an average of the temperatures of the coolant CW measured by the plurality of temperature measuring parts 200A and 200B as a measured temperature.

The temperature measuring part 200 may be provided as a plurality of temperature measuring parts, and the plurality of temperature measuring parts 200A and 200B may be installed at different plurality of locations on the tank part 20 and may measure temperatures of the coolant CW.

Referring to FIG. 3, in the present disclosure, among the plurality of temperature measuring parts 200, one temperature measuring part 200A is disposed on the side portion of the tank part 20, and another temperature measuring part 200B is disposed on the bottom surface of the tank part 20. However, the present disclosure is not limited thereto, and the temperature measuring parts may be disposed at various locations within the technical concept of measuring the temperatures of the coolant CW stored inside the tank part 20 at different locations.

Referring to FIGS. 1, 3, 4, and 5, the detecting of a leak of the coolant CW (S400) may include calculating a mass change rate according to temperature (S410), comparing a calculated measured mass change rate with a reference mass change rate (S430), and determining whether there is a leak of the coolant CW (S450).

In the calculating of the mass change rate according to temperature (S410), the control part 300 receives information on the mass and temperature of the coolant CW stored in the tank part 20 from the mass measuring part 100 and the temperature measuring part 200, and may detect a leak of the coolant CW stored in the tank part 20 using the information on the mass and temperature.

As described herein, when the temperature measuring part 200 is provided as a plurality of temperature measuring parts, the average of the temperatures measured by the plurality of temperature measuring parts 200A and 200B may be calculated as the measured temperature, and when the mass measuring part 100 is provided as a plurality of mass measuring parts, the average of the masses measured by the plurality of mass measuring parts 100 may be calculated as the measured mass.

Referring to FIG. 5, the control part 300 may have information on a mass function of the coolant CW according to temperature. In some embodiments, the information may include information on the mass change rate of the coolant CW according to temperature.

That is, the control part 300 may include information on the reference mass change rate, which is a mass change rate of the coolant CW according to temperature, when the mass (density) at a first temperature (e.g., 15 °C) is a first mass P1 and the mass at a second temperature (e.g., 30 °C) is a second mass P2.

The control part 300 may calculate a measured mass change rate, which is a mass change rate of the coolant CW currently stored in the tank part 20 according to temperature, using information obtained from the mass measuring part 100 and the temperature measuring part 200.

Referring to FIG. 5, the control part 300 may have information on a measured mass change rate, which is a mass change rate of the coolant CW according to temperature, when the measured mass (density) at a first measured temperature (e.g., 15 °C) is a first mass P1' and the measured mass (density) at a second measured temperature (e.g., 30 °C) is a second mass P2'.

In the comparing of the measured mass change rate and the reference mass change rate (S430), the control part 300 may detect whether there is a leak of the coolant CW by comparing the calculated "measured mass change rate" with the reference mass change rate, which is a preset mass change rate according to temperature.

In the determining of whether there is a leak of the coolant CW (S450) by comparing the measured mass change rate and the reference mass change rate (S430), the control part 300 may determine that the coolant CW stored in the tank part 20 is leaking when a difference between the two change rates exceeds a preset range.

Preferably, when the measured mass change rate deviates from a value between 90% to 110% of the reference mass change rate, the control part 300 may detect that there is a leak of the coolant CW stored in the tank part 20.

Referring to FIG. 5, the control part 300 may store information on a reference mass at a preset temperature. As described above, the "information on the reference mass" may refer to "information on a reference density," which is a mass value according to a preset volume at a preset temperature.

The control part 300 may set a permissible range PR for mass change at the preset temperature. As a result, in addition to calculating the mass change rate according to temperature, when the measured mass measured at the preset temperature deviates from the permissible range PR, it may be determined that the coolant CW stored in the tank part 20 has leaked.

Preferably, when the measured mass deviates from a value between 90% to 110% of the reference mass, the control part 300 may detect that there is a leak in the coolant CW stored in the tank part 20.

Accordingly, the control part 300 may receive information on the measured mass, which is measured at a preset temperature, from the mass measuring part 100, and detect a leak of the coolant CW by comparing the measured mass with the reference mass and determining whether the measured mass falls within the permissible range.

At this time, the control part 300 may reset the reference mass at the preset temperature at preset intervals.

**In** other words, even when the volume of the coolant CW decreases due to evaporation or the like while flowing in the cooling system, rather than an actual leak of the coolant CW stored in the tank part 20, resetting the reference mass may prevent misjudgment of a leak caused by the decrease in volume of the coolant CW due to evaporation or the like.

Referring to FIGS. 1 and 6, in the notifying of the leak of the coolant CW (S500), after the control part 300 determines whether there is a leak of the coolant CW, the control part 300 may transmit this information to the alarm part 500, which may visually or audibly notify the user of the leak of the coolant CW stored in the tank part 20.

Accordingly, after a leak of the coolant CW occurs, the user can quickly recognize the leak of the coolant CW and take additional measures to effectively control the temperature of the energy storage system 10.

**In** the coolant leak detection apparatus 1 and the method of detecting a coolant leak using the same according to embodiments of the present disclosure, a leak of the coolant CW can be precisely detected without the need for separate equipment to measure the volume of the coolant CW, such as measuring the level of the coolant CW stored in the tank part 20, by measuring the mass (density) while accounting for volume changes of the coolant CW according to temperature and calculating the mass change rate according to temperature.

Further, as the coolant CW is effectively stirred inside the tank part 20 due to the pressure of the coolant CW circulating inside the stirring part 400, the uniformity of the coolant CW may be enhanced and the reliability of mass and temperature measurements may be improved.

Although the present disclosure has been described with reference to limited embodiments and drawings, the present disclosure is not limited thereto, and also it is apparent that various modifications and variations can be made by those of ordinary skill in the art to which the present disclosure pertains.

According to embodiments, a leak of the coolant can be precisely detected without the need for separate equipment to measure the volume of the coolant, such as measuring the level of the coolant stored in a tank part, by measuring a mass (density) while accounting for volume changes of the coolant according to temperature and calculating a mass change rate according to temperature.

For example, as the coolant is effectively stirred inside the tank part due to the pressure of the coolant circulating inside a stirring part, the uniformity of the coolant can be enhanced and the reliability of mass and temperature measurements can be improved.

However, the effects that can be obtained from the present disclosure are not limited to the effects mentioned above, and unmentioned other technical effects may be clearly understood by those skilled in the art from the following description. It should be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A coolant leak detection apparatus (1) comprising:
a mass measuring part (100) being installed on a tank part (20) that stores a coolant (CW) and the mass measuring part being configured to measure a mass of the coolant stored in the tank part;
a temperature measuring part (200) being installed on the tank part (20) and configured to measure a temperature of the coolant (CW) stored in the tank part; and
a control part (300) electrically connected to the mass measuring part (100) and the temperature measuring part (200) and configured to detect a leak of the coolant (CW) using information on the mass and information on the temperature of the coolant, which are received from the mass measuring part and the temperature measuring part, respectively.

2. The coolant leak detection apparatus of claim 1, wherein the temperature measuring part (200) is configured to measure temperatures of the coolant (CW), which is stored in the tank part (20), at a first time point and a second time point different from the first time point.

3. The coolant leak detection apparatus of claim 2, wherein the mass measuring part (100) is configured to measure masses of the coolant (CW), which is stored in the tank part (20), at the first time point and the second time point.

4. The coolant leak detection apparatus of any one of claims 1 to 3, wherein the control part (300) stores information on a reference mass of the coolant (CW) at a preset temperature.

5. The coolant leak detection apparatus of any one of claims 1 to 4, wherein the mass measuring part (100) is disposed below the tank part (20) and is configured to measure the mass of the coolant (CW).

6. The coolant leak detection apparatus of claim 5, wherein the control part (300) is configured to calculate, as a measured mass, an average of masses of the coolant (CW) measured by the mass measuring part (100) over a preset period of time.

7. The coolant leak detection apparatus of any one of claims 1 to 6, further comprising a stirring part (400) installed inside the tank part (20) and configured to circulate the coolant (CW) contained in the tank part.

8. The coolant leak detection apparatus of any one of claims 1 to 7, further comprising an alarm part (500) configured to receive information on whether the leak of the coolant (CW) has been detected from the control part (300) and provide an alarm to a user when the leak has been detected.

9. The coolant leak detection apparatus of any one of claims 1 to 8, wherein the control part (300) is configured to reset a reference mass at a preset temperature at every preset time interval.

10. A method of detecting a coolant leak, the method comprising:
measuring a mass of a coolant (CW) stored in a tank part (20);
measuring a temperature of the coolant (CW) stored in the tank part (20); and
detecting a leak of the coolant (CW) using the measured mass and temperature, by a control part (300).

11. The method of claim 10, wherein the measuring of the temperature of the coolant comprises measuring temperatures of the coolant (CW) stored in the tank part (20) at a first time point and a second time point different from the first time point.

12. The method of claim 11, further comprising, calculating, using the control part (300), a measured mass change rate of the coolant (CW) between the first time point and the second time point according to temperature.

13. The method of any one of claims 10 to 12, wherein measuring of the mass of the coolant (CW) comprises measuring, with a measuring part (100) disposed below the tank part (20), the mass of the coolant.

14. The method of any one of claims 10 to 13, further comprising stirring the coolant (CW) contained in the tank part (20).

15. The method of any one of claims 10 to 14, further comprising generating a notification regarding the leak of the coolant (CW) when an alarm part (500) receives an electrical signal from the control part (300) upon detecting the leak.
